# EUROPÄISCHE PATENTANMELDUNG

(11) **EP 3 067 576 A1**
(43) Veröffentlichungstag der Anmeldung: **14.09.2016**
(21) Anmeldenummer: 16152498.8
(22) Anmeldetag: 25.01.2016
(51) Int. Cl.: F16C 11/06, F16J 1/22, F16C 7/06

(54) **KUGELGELENK, INSBESONDERE PLEUELKUGELGELENK, SOWIE PLEUEL MIT EINEM KUGELGELENK**

(30) Priorität: 10.03.2015 DE 102015103463
(71) Anmelder: Hilite Germany GmbH, 97828 Marktheidenfeld (DE)
(72) Erfinder: Kaufmann, Dietmar, 97837 Tiefenthal (DE)

(57) **Zusammenfassung**

Die Erfindung betrifft ein Kugellager (10) mit einem an einer Stützstange (18) angeordneten Kugelkopf (20), der in einer Kugelkopfaufnahme (30) gelagert ist, wobei der Kugelkopf (20) an seiner Außenfläche in der Kugelkopfaufnahme (30) durch einen Sicherungsring (50) gegen Herausgleiten aus der Kugelkopfaufnahme (30) gesichert ist.

Die Erfindung betrifft ferner ein Pleuel (100) mit einem solchen Kugellager (10).

## Beschreibung

### Technisches Gebiet

Die Erfindung betrifft ein Kugellager sowie ein Pleuel mit einem Kugellager.

### Stand der Technik

Bei Brennkraftmaschinen wirkt sich ein hohes Verdichtungsverhältnis positiv auf den Wirkungsgrad des Verbrennungsmotors aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuellänge bekannt.

Aus der DE 10 2005 055 199 A1 ist ein Pleuel bekannt, bei dem im kleinen Pleuelauge ein schwenkbarer Hebel eingesetzt ist, in dessen zentraler Öffnung ein Exzenter eingesetzt ist. Der Exzenter dient zur Aufnahme eines Kolbenbolzens. Der Hebel bildet mit dem Exzenter eine Welle-Nabe-Verbindung. Da die Verbindung im Betrieb des Pleuels hoch belastet wird, sind die Anforderungen an die Fertigungstoleranzen der Verbindungspartner hoch. Die am oberen Pleuellagerauge gelagerten Stützstangen sind mit einem Kugellager in Kugelkopfaufnahmen gelagert und dort mit Querbolzen verschraubt.

### Offenbarung der Erfindung

Eine Aufgabe der Erfindung ist es, ein hochbelastbares Kugellager mit einem in einer Kugelkopfaufnahme gelagerten Kugelkopf zu schaffen, das einfach zu montieren ist und hoch belastbar ist und Fertigungstoleranzen zulässt.

Eine weitere Aufgabe ist es, ein Pleuel mit einem solchen Kugellager anzugeben.

Die vorgenannten Aufgaben werden mit den Merkmalen der unabhängigen Ansprüche gelöst.

Günstige Ausgestaltungen und Vorteile der Erfindung ergeben sich aus den weiteren Ansprüchen, der Beschreibung und der Zeichnung.

Es wird ein Kugellager mit einem an einer Stützstange angeordneten Kugelkopf vorgeschlagen, der in einer Kugelkopfaufnahme gelagert ist, wobei der Kugelkopf an seiner Außenfläche in der Kugelkopfaufnahme durch einen Sicherungsring gegen Herausgleiten aus der Kugelkopfaufnahme gesichert ist.

Der Sicherungsring kann einfach in die Kugelkopfaufnahme eingesetzt werden. Der Sicherungsring kann insbesondere entlang seiner Längsachse symmetrisch ausgebildet sein, so dass eine Montage verwechslungssicher erfolgen kann. Alternativ kann die Ausgestaltung auch unsymmetrisch sein. Vorteilhaft ist der Kugelkopf in der Kugelkopfaufnahme verschwenkbar und gleichzeitig axial nur mit hoher Auszugskraft aus der Kugelkopfaufnahme herausziehbar.

Nach einer günstigen Ausgestaltung der Erfindung kann der Sicherungsring mit Vorspannung gegen eine Wand der Kugelkopfaufnahme gelegt sein. Durch die radiale Vorspannung ist bereits eine axiale Sicherung des Kugelkopfes möglich.

Nach einer günstigen Ausgestaltung der Erfindung kann die Kugelkopfaufnahme an ihrem offenen Ende einen Hinterschnitt aufweisen, der den Sicherungsring in der Kugelkopfaufnahme axial sichert. Ein solcher Hinterschnitt ist fertigungstechnisch leicht herstellbar und bietet eine besonders hohe Sicherheit gegen ein Herausgleiten des Sicherungsrings und damit des Kugelkopfes aus der Kugelkopfaufnahme.

Nach einer günstigen Ausgestaltung der Erfindung kann die Kugelkopfaufnahme ein gewölbtes Bodenteil aufweisen, an das sich in axialer Richtung ein zylinderförmiger Raum anschließt. Das gewölbte Bodenteil ist in deren Kontaktbereich vorteilhaft an die Außenkontur des Kugelkopfes angepasst, so dass der Kugelkopf leicht verschwenkbar ist. Gleichzeitig bietet das gewölbte Bodenteil eine definierte Endlage des Kugelkopfs in axialer Richtung. Der gewölbte Bereich ist vorteilhafterweise etwa so tief wie der Radius des Kugelkopfes. Der zylinderförmige Raum bietet Platz zur Aufnahme des Sicherungsrings und ist im Durchmesser größer als der Kugelkopf.

Nach einer günstigen Ausgestaltung der Erfindung kann der Sicherungsring an seinem Umfang unterbrochen sein. Der Sicherungsring kann zur Montage mit einem geeigneten Werkzeug im Umfang verringert und in die Kugelkopfaufnahme eingeführt werden und daraufhin sich wieder im Umfang ausdehnen und an der Wand der Kugelkopfaufnahme radial vorgespannt anliegen. Dazu können die Innendurchmesser der Kugelkopfaufnahme im vorgesehenen Kontaktbereich mit dem Sicherungsring und der Außendurchmesser des Sicherungsrings geeignet aufeinander abgestimmt werden.

Nach einer günstigen Ausgestaltung der Erfindung kann der Sicherungsring an seiner im eingebauten Zustand dem Kugelkopf zugewandten Stirnseite einen radial nach innen weisenden Bund aufweisen. Dies kann ein umgebördelter Rand sein, oder auch ein oder mehrere nach innen umgelegte Wandteile des Sicherungsrings. Der Sicherungsring kann beispielsweise ein Blechbiegeteil sein.

Nach einer günstigen Ausgestaltung der Erfindung kann der Sicherungsring radial nach innen eine Wölbung aufweisen. Mit besonderem Vorteil kann diese Wölbung symmetrisch zu einer Mitte einer Längsachse des Sicherungsrings ausgebildet sein. Dies erlaubt einen besonders abriebarmen Kontakt zwischen Sicherungsring und Kugelkopf, so dass auch erhöhte Reinheitsanforderungen erfüllt werden können.

Nach einer günstigen Ausgestaltung der Erfindung kann der Sicherungsring aus Kunststoff gebildet sein. Der Kugelkopf kann vorteilhaft aus Metall sein. Die Paarung Metall/Kunststoff ist besonders günstig, um Abrieb zu vermeiden.

Nach einem weiteren Aspekt der Erfindung wird ein Pleuel mit wenigstens einem Kugellager mit einem an einer Stützstange angeordneten Kugelkopf vorgeschlagen, wobei der Kugelkopf in einer Kugelkopfaufnahme gelagert ist, und wobei der Kugelkopf an seiner Außenfläche in der Kugelkopfaufnahme durch einen Sicherungsring gegen Herausgleiten aus der Kugelkopfaufnahme gesichert ist. Das Kugellager ist günstig herzustellen, einfach zu montieren und bietet eine hohe Auszugskraft gegen ein Herausziehen des Kugelkopfs aus der Kugelkopfaufnahme.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in längsgeschnittener Darstellung ein Pleuel mit zwei Kugellagern nach dem Stand der Technik;
- Fig. 2: eine erste Ausgestaltung eines Kugellagers nach einem Ausführungsbeispiel der Erfindung; und
- Fig. 3: eine weitere Ausgestaltung eines Kugellagers nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

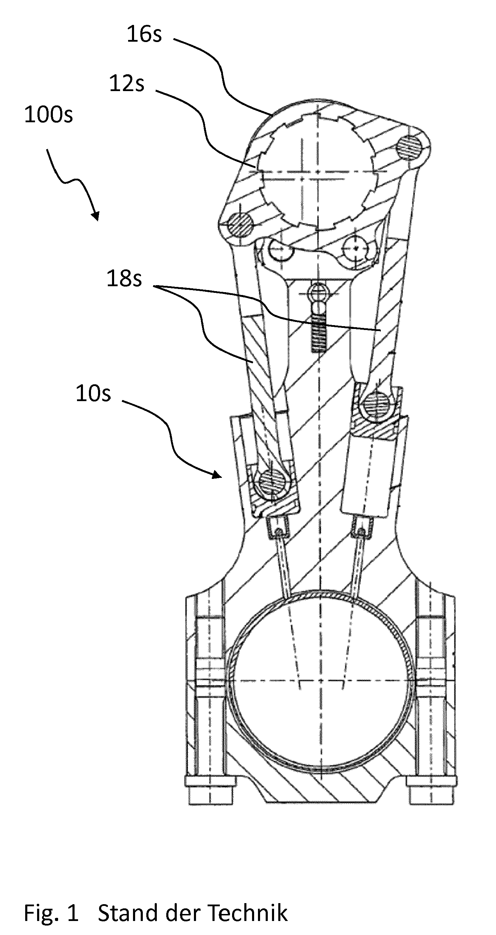

Das bekannte Pleuel 100s in Figur 1 weist ein oberes Pleuellagerauge 12s auf, das zur Aufnahme eines nicht dargestellten Kolbenbolzens vorgesehen ist. Dieser Kolbenbolzen ist in üblicher Weise fest in einen Brennraumkolben des Verbrennungsmotors eingesteckt. Das obere Pleuellagerauge 12s ist durch eine Pleuelstange von dem in der Figur unteren, großen Pleuellagerauge getrennt.

Das obere Pleuellagerauge 12s ist mittels eines als Exzenter ausgebildeten Lagerbauteils um eine Schwenkachse schwenkbar, die parallel versetzt zur Längsachse des oberen Pleuellagerauges 12s liegt. Dazu ist der Exzenter in eine Öffnung eines Hebels 16s eingesetzt. Somit ist es möglich, das obere Pleuellagerauge 12s in seinem Abstand zu einer Pleuellagerachse des in der Figur unteren Pleuellagerauges zu verändern und über die am oberen Pleuellagerauge 12s gelagerten Stellkolben 18s eine variable Verdichtung im Brennraum eines Verbrennungsmotors zu verwirklichen. Dazu sind die Stellkolben 18s mit einem Kugellager 10s in Aufnahmen gelagert und dort mit Querbolzen verschraubt. Die Stellkolben 18s sind mit einem in mit den Stellkolben 18s zusammenwirkenden Hydraulikkammern herrschenden Hydraulikdruck beaufschlagt.

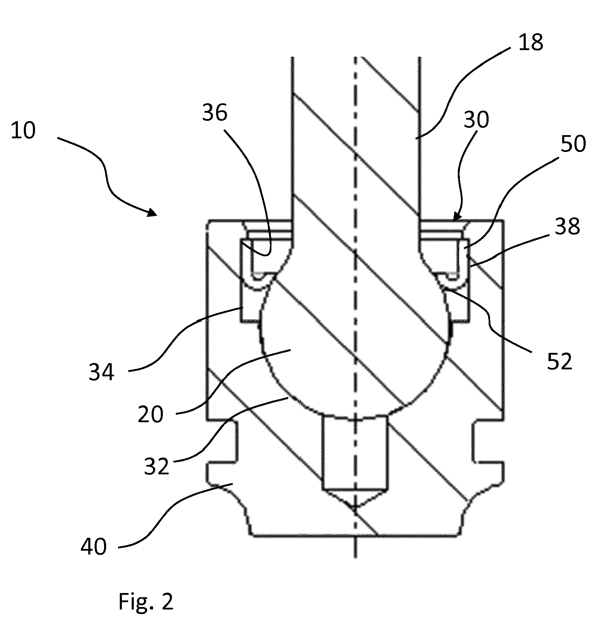

Figur 2 zeigt eine erste Ausgestaltung eines Kugellagers 10 nach einem Ausführungsbeispiel der Erfindung. Das Kugellager 10 umfasst einen an einer Stützstange 18 angeordneten Kugelkopf 20, der in einer Kugelkopfaufnahme 30 eines Außenteils 40 gelagert ist. Der Kugelkopf 20 ist an seiner Außenfläche in der Kugelkopfaufnahme 30 durch einen Sicherungsring 50 gegen Herausgleiten aus der Kugelkopfaufnahme 30 gesichert.

Die Kugelkopfaufnahme 30 umfasst ein gewölbtes Bodenteil 32, das an die Außenkontur des Kugelkopfs 20 angepasst ist und auf dem der Kugelkopf 20 gleiten kann, um Verkippungen der Stützstange 18 zu ermöglichen. In axialer Richtung zum offenen Ende der Kugelkopfaufnahme 30 hin schließt sich ein zylinderförmiger Raum 34 an, in dem der Sicherungsring 50 angeordnet ist.

Die Kugelkopfaufnahme 30 weist an ihrem offenen Ende einen Hinterschnitt 36 auf, der den Sicherungsring 50 in der Kugelkopfaufnahme 30 axial sichert. Damit ist eine hohe Sicherheit gegen ein Herausgleiten oder Herausziehen des Sicherungsrings 50 und damit des Kugelkopfs 20 aus der Kugelkopfaufnahme 30 gegeben.

Der Sicherungsring 50 legt sich mit Vorspannung gegen eine Wand 38 der Kugelkopfaufnahme 30. Dazu ist der Sicherungsring 50 geschlitzt und kann zur Montage zusammengedrückt und in die Kugelkopfaufnahme 30 eingesetzt werden. Außerdem lässt sich der geschlitzte Sicherungsring 50 einfach über die Stützstange 18 schieben.

Der Sicherungsring 50 ist z.B. als Blechbauteil ausgebildet und weist an seiner im eingebauten Zustand dem Kugelkopf 20 zugewandten Stirnseite einen radial nach innen weisenden Bund 52 auf, der eine axiale Bewegung des Kugelkopfs 20 limitiert. Gleichzeitig kann der Kugelkopf mit seiner Außenfläche auf dem Bund 52 bei einer Verkippung gleiten.

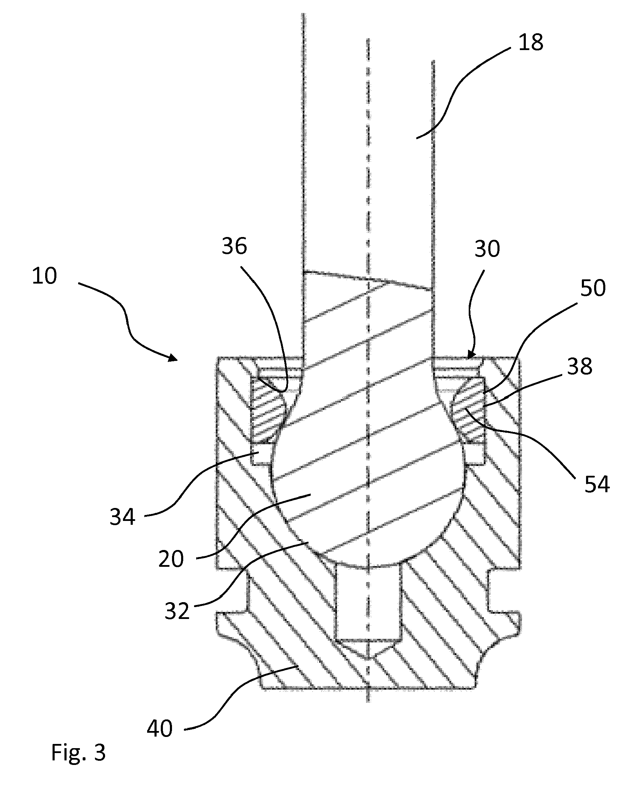

Figur 3 zeigt eine weitere Ausgestaltung eines Kugellagers 10 nach einem Ausführungsbeispiel der Erfindung. Das Kugellager 10 umfasst einen an einer Stützstange 18 angeordneten Kugelkopf 20, der in einer Kugelkopfaufnahme 30 eines Außenteils 40 gelagert ist. Der Kugelkopf 20 ist an seiner Außenfläche in der Kugelkopfaufnahme 30 durch einen Sicherungsring 50 gegen Herausgleiten aus der Kugelkopfaufnahme 30 gesichert.

Die Kugelkopfaufnahme 30 umfasst ein gewölbtes Bodenteil 32, das an die Außenkontur des Kugelkopfs 20 angepasst ist und auf dem der Kugelkopf 20 gleiten kann, um Verkippungen der Stützstange 18 zu ermöglichen. In axialer Richtung zum offenen Ende der Kugelkopfaufnahme 30 hin schließt sich ein zylinderförmiger Raum 34 an, in dem der Sicherungsring 50 angeordnet ist.

Die Kugelkopfaufnahme 30 weist an ihrem offenen Ende einen Hinterschnitt 36 auf, der den Sicherungsring 50 in der Kugelkopfaufnahme 30 axial sichert. Damit ist eine hohe Sicherheit gegen ein Herausgleiten oder Herausziehen des Sicherungsrings 50 und damit des Kugelkopfs 20 aus der Kugelkopfaufnahme 30 gegeben.

Der Sicherungsring 50 legt sich mit Vorspannung gegen eine Wand 38 der Kugelkopfaufnahme 30. Dazu ist der Sicherungsring 50 geschlitzt und kann zur Montage zusammengedrückt und in den Kugelkopfaufnahme 30 eingesetzt werden. Außerdem lässt sich der geschlitzte Sicherungsring 50 einfach über die Stützstange 18 schieben.

Der Sicherungsring 50 ist z.B. aus Kunststoff gebildet und weist an seiner im eingebauten Zustand dem Kugelkopf 20 zugewandten Stirnseite eine radial nach innen weisende Wölbung 54 auf, die eine axiale Bewegung des Kugelkopfs 20 limitiert. Gleichzeitig kann der Kugelkopf mit seiner Außenfläche auf der Wölbung 54 bei einer Verkippung gleiten.

Das Kugellager 10 wird vorteilhaft für die Lagerung der Stützstange 18 eines Pleuels 100 eingesetzt, welches beispielsweise in einem Verbrennungsmotor mit einstellbarem Verdichtungsverhältnis Anwendung findet, wobei das Pleuel 100 wie oben beschrieben Mittel zur Verstellung der effektiven Pleuellänge aufweisen kann. Auch bei hoher Belastung ist der Kugelkopf 20 des Kugellagers 10 sicher in der Kugelkopfaufnahme 30 gehalten.

## Patentansprüche

1. Kugellager (10) mit einem an einer Stützstange (18) angeordneten Kugelkopf (20), der in einer Kugelkopfaufnahme (30) gelagert ist, **dadurch gekennzeichnet, dass** der Kugelkopf (20) an seiner Außenfläche in der Kugelkopfaufnahme (30) durch einen Sicherungsring (50) gegen Herausgleiten aus der Kugelkopfaufnahme (30) gesichert ist.

2. Kugellager nach Anspruch 1, **dadurch gekennzeichnet, dass** die Kugelkopfaufnahme (30) an ihrem offenen Ende einen Hinterschnitt (36) aufweist, der den Sicherungsring (50) in der Kugelkopfaufnahme (30) axial sichert.

3. Kugellager nach Anspruch 1 oder 2, **dadurch gekennzeichnet, dass** die Kugelkopfaufnahme (30) ein gewölbtes Bodenteil (32) aufweist, an das sich in axialer Richtung ein zylinderförmiger Raum (34) anschließt.

4. Kugellager nach einem der vorhergehenden Ansprüche, **dadurch gekennzeichnet, dass** der Sicherungsring (50) mit Vorspannung gegen eine Wand (38) der Kugelkopfaufnahme (30) gelegt ist.

5. Kugellager nach einem der vorhergehenden Ansprüche, **dadurch gekennzeichnet, dass** der Sicherungsring (50) an seinem Umfang unterbrochen ist

6. Kugellager nach einem der vorhergehenden Ansprüche, **dadurch gekennzeichnet, dass** der Sicherungsring (50) an seiner im eingebauten Zustand dem Kugelkopf (20) zugewandten Stirnseite einen radial nach innen weisenden Bund (52) aufweist.

7. Kugellager nach einem der Ansprüche 1 bis 5, **dadurch gekennzeichnet, dass** der Sicherungsring (50) radial nach innen eine Wölbung (54) aufweist.

8. Kugellager nach einem der vorhergehenden Ansprüche, **dadurch gekennzeichnet, dass** der Sicherungsring (50) aus Kunststoff gebildet ist.

9. Pleuel (100) mit wenigstens einem Kugellager (10) nach einem der vorhergehenden Ansprüche.

10. Pleuel (100) nach Anspruch 9, **dadurch gekennzeichnet, dass** das Pleuel (100) Mittel zur Verstellung einer effektiven Pleuellänge aufweist.

11. Verbrennungsmotor mit einem einstellbaren Verdichtungsverhältnis mit wenigstens einem Pleuel (100) nach Anspruch 10.
